# EUROPEAN PATENT SPECIFICATION

(11) **EP 3 426 514 B1**
(45) Date of publication and mention of the grant of the patent: **05.08.2020**
(21) Application number: 16709759.1
(22) Date of filing: 10.03.2016
(51) Int. Cl.: B60J 7/02

(54) **PANEL AND OPEN ROOF CONSTRUCTION PROVIDED THEREWITH**
PANEEL UND DAMIT AUSGESTATTETE OFFENE DACHKONSTRUKTION
PANNEAU ET CONSTRUCTION DE TOIT OUVRANT COMPORTANT CELUI-CI

(43) Date of publication of application: 16.01.2019
(73) Proprietor: Inalfa Roof Systems Group B.V., 5807 GW Oostrum (NL)
(72) Inventor: VAN DOLEWEERD, Theodorus, 6024 AK Budel-Dorplein (NL); RIKKERT, Robert, 5672 VS Nuenen (NL); DE BIE, Sander, 6361 XG Nuth (NL); GEURTS, Ruud, 5988 CJ Helden (NL)
(74) Representative: De Vries & Metman
(86) International application number: PCT/EP2016/055139
(87) International publication number: WO 2017/152980

(56) References cited:
- EP-A2- 1 894 760
- WO-A1-2012/132745
- WO-A2-2014/191158
- DE-A1- 4 012 635
- DE-A1- 19 706 839

## Description

The invention concerns a panel and especially a panel comprising a panel main body and a reinforcement assembly including at least one reinforcement member. The reinforcement member is made of plastic and is provided with a fiber based reinforcement. Such panel is known in the prior art, e.g. from WO 2014/191158. According to the invention the reinforcement could be in the form of a fiber bundle skeleton, a sheet, or a combination thereof as claimed in independent claims 1 and 14 and dependent claims 2 - 13. Such reinforcement is much lighter than a conventional steel reinforcement member.

Hereinafter the invention will be elucidated while referring to the drawing in which:
Fig. 1 is a perspective view of a vehicle roof having an open roof construction including a panel according to the invention.
Fig. 2 is an enlarged perspective view of a reinforcement assembly formed from a single reinforcement member according to a first embodiment.
Fig. 3 is a plan view of a reinforcement assembly comprising several reinforcement members in a second embodiment.
Fig. 4 is a view according to the arrow IV in Fig. 3 showing a part of the front reinforcement member in the reinforcement assembly.
Fig. 5 is a perspective view of an embodiment of the panel according to the invention.
Fig. 6 and 7 are enlarged cross sectional views along the lines VI-VI, and VII-VII, respectively, in Fig. 5.
Figs. 8 - 10 are plan views of further embodiments of the reinforcement assembly.
Figs. 11 - 23 are cross sectional views of different embodiments of a reinforcement member and part of the panel main body according to the invention.
Fig. 24 is a cross sectional view of the reinforcement member of Fig. 23 in a slightly changed embodiment.
Fig. 25 is a perspective view of the reinforcement member of Fig. 24.
Figs. 26 - 28 and 30 are cross sectional views of further embodiments of the reinforcement member and part of the panel main body according to the invention.
Fig. 29 is a very schematic illustration of a pultrusion or extension molding process to form the embodiment of the reinforcement member of Fig. 28.

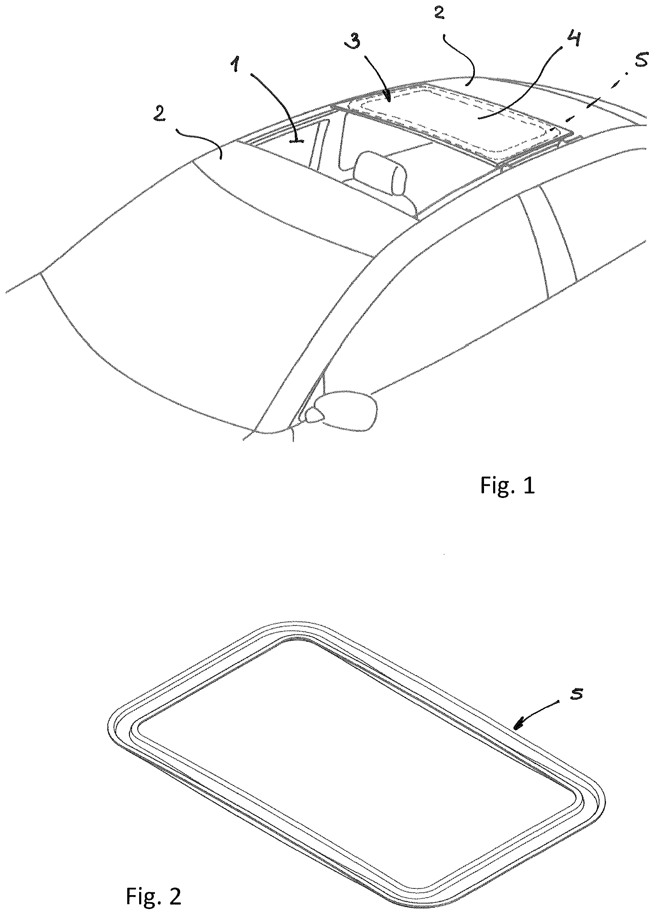

Firstly referring to Fig. 1, an example is illustrated of a vehicle, such as a passenger car, having an open roof construction. Said open roof construction is for opening and closing at least one roof opening 1 in a stationary roof part 2 of the vehicle and includes at least one movable panel, in particular a rigid, transparent panel 3 which, by means not illustrated in detail but known per se, can be moved for opening and closing said roof opening 1. Commonly, as is known, movable panel 3 is guided in longitudinal guides mounted to or formed in stationary roof part 2 along longitudinal sides of roof opening 1. A user operated device such as a motor or crank (not illustrated) is operably coupled to panel 3 via cables or the like to move panel 3 selectively between its open and closed positions. In Fig. 1 closure panel 3 has been illustrated in a position in which it opens roof opening 1. The invention can be used for all types of open roof constructions comprising one or more panels.

The panel 3 comprises a panel main body 4, in particular made of glass or plastic to reduce the weight of panel 3.

In order to increase the rigidity of panel 3 and thereby reduce deformation of the panel under load, panel 3 is provided with a reinforcement assembly made up of one or more reinforcement members 5 attached to the lower side of panel main body 4.

As illustrated in Fig. 2, reinforcement member 5 forms the complete reinforcement assembly and is formed as a rectangular ring, the four sides of which extending along and near each edge of panel main body 4.

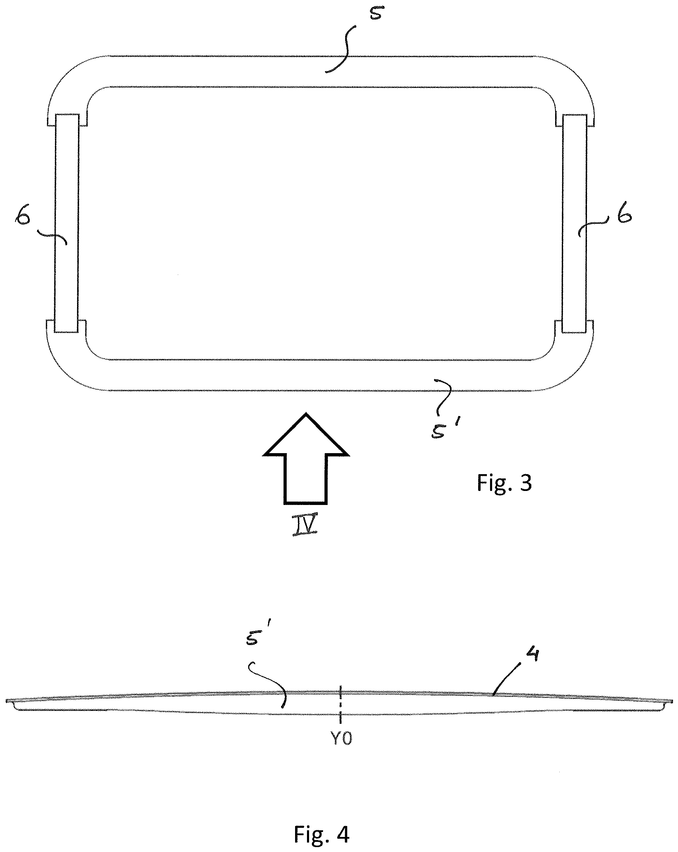

Fig. 3 shows another embodiment in which the reinforcement is made up of a front reinforcement member 5, a rear reinforcement member 5' and two side brackets 6, normally made of metal, in particular steel and used for connecting panel 3 to the operating mechanism for the panel. The side brackets may be encapsulated to panel main body 4 and to the front and rear reinforcement members 5.

Fig. 4 illustrates that the thickness of reinforcement member 5 may vary along its length. Generally, the thickness will be greater near the center of panel main body 4 as the need for reinforcement is at a maximum.

The reinforcement member 5 according to the invention is made of fiber reinforced plastic in order to keep the weight to a minimum, and still provide sufficient rigidity.

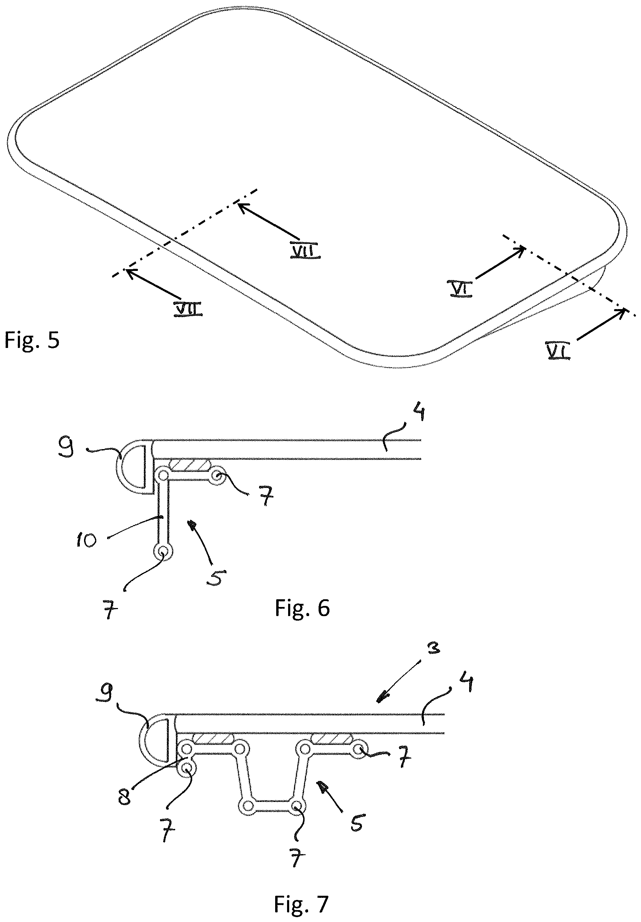

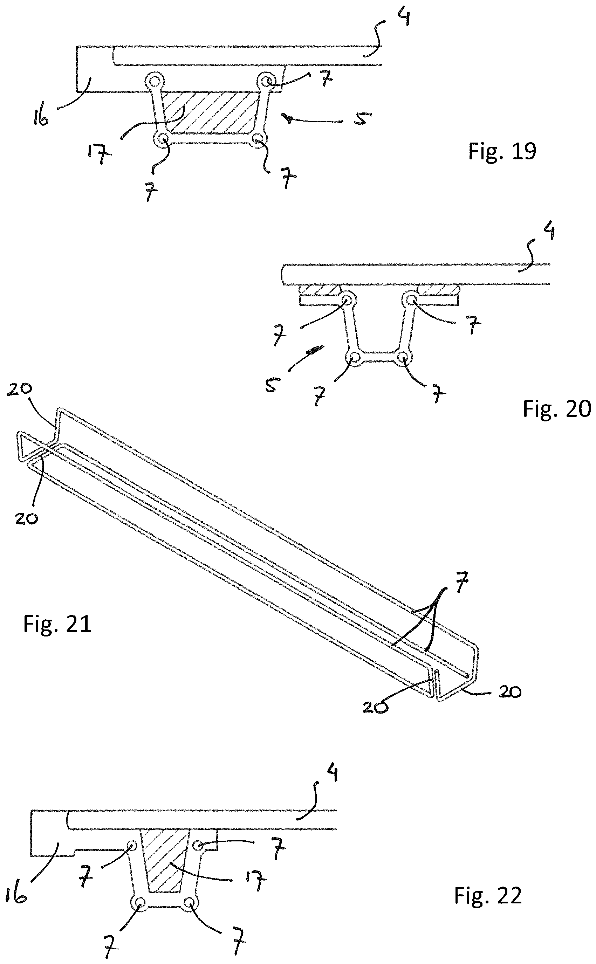

In the embodiment according to the invention of Figs. 5 - 7, the fibers are arranged in the form of a bundle 7 of continuous fibers shaped into several loops extending substantially parallel to the length of the (side of) the reinforcement member 5 in different planes, a transverse loop section 20 (Fig. 21) connecting the parallel fiber bundles 7. The fiber bundles 7 may be wound by a robot and comprise commingled fibers which are attached to each other by means of a plastic matrix material which is heated and/or pressurized to form a rigid bundle. By shaping the loops into a three dimensional skeleton, the fibers obtain a three dimensional rigidity greatly improving the total rigidity of panel 3. The parallel fiber loop sections form, as seen in cross section, an end or corner of reinforcement member 5 which is made by molding, particularly injection molding with the fiber skeleton inserted in the molding tool so that it is incorporated in reinforcement member 5.

At the front and rear side of panel main body 4, as shown in Fig. 7, reinforcement member 5 forms a closed section with panel main body 4 to obtain maximum rigidity. Portions of reinforcement member 5 extending parallel with the lower side of panel main body 4 are used to attach reinforcement member 5 to panel main body 4, for example by encapsulation or gluing. A depending side section 8 of reinforcement member 5 is used to attach a seal 9, in this case a bulb seal, to reinforcement member 5 and panel main body 4, also by encapsulation, by gluing or otherwise.

Fig. 6 shows a side edge of panel 3 where reinforcement member 5 forms a side cover 10 and a section for attachment of bulb seal 9. The shape of side cover 10 varies along its length as is shown in Fig. 5.

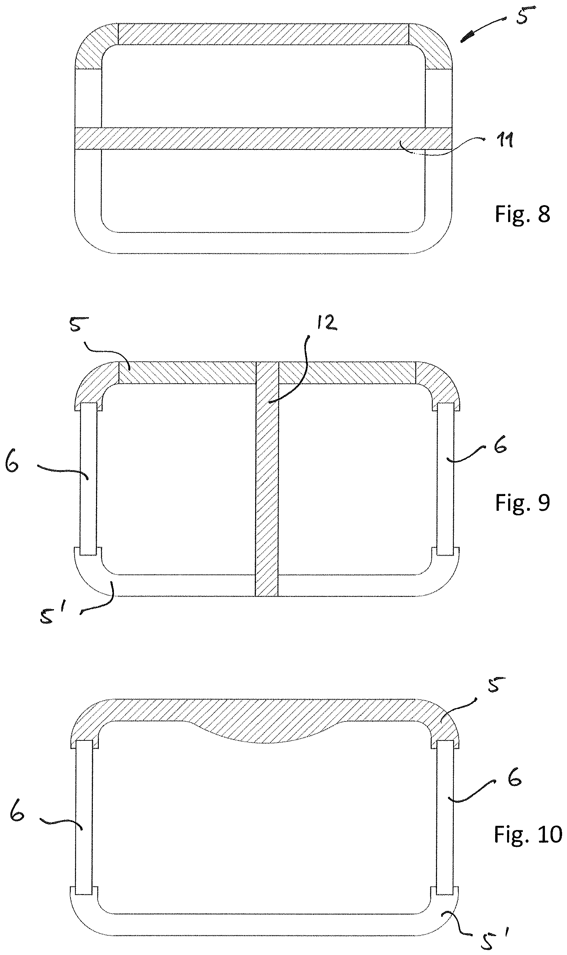

Figs. 8 - 10 show embodiments of the reinforcement assembly having an increased rigidity, especially in a central section of panel main body 4. In the embodiment of Fig. 8, reinforcement member 5 comprises a central transverse portion 11 extending from one side of the reinforcement assembly to the other and being attached to the lower side of panel main body 4 to enhance the rigidity thereof, especially against warping. The front and rear portions of reinforcement member 5 and optionally also the corner portions are formed as closed sections (in combination with the panel main body), for example as in Fig. 7, while central transverse portion 11 preferably also forms a closed section with panel main body 4. The cross section of central transverse portion 11 of reinforcement member 5 will be kept to a minimum to minimize the visual appearance on transparent panel 3.

In the embodiment of Fig. 9, which is based on that of Fig. 3, a central portion 12 of the reinforcement extends in longitudinal direction of panel 3 parallel to the side edges thereof.

The embodiment of Fig. 10, also based on that of Fig. 3, comprises a front reinforcement member 5 having an increased width in and near the center of panel main body 4 to increase the rigidity there.

Instead of or in addition to a skeleton of loop-shaped fiber bundles 7, it is also possible to use sheets 13 of woven fiber layers. The weft direction of the various unidirectional woven layers are preferably angled to each other, so that the fibers run in different directions to get rigidity in various directions. The sheets 13 are made by pressing the layers together, preferably using resin and heat to form a matrix material. The fiber sheet or sheets 13 can be used in a plane shape or in a pre-shaped non-planar shape.

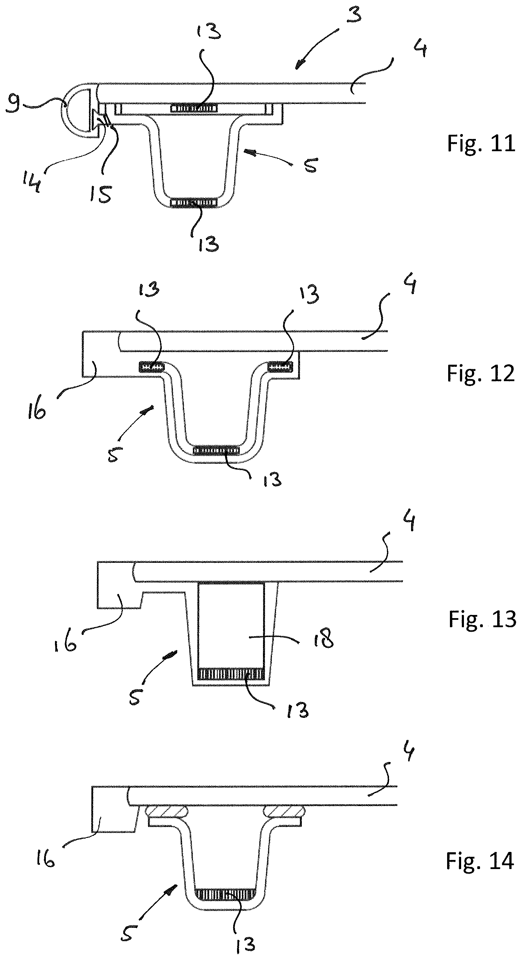

Fig. 11 shows an embodiment having two fiber sheets 13, one in the bottom of an injection molded reinforcement member 5 and one in a separate top portion 5" of reinforcement member 5. The reinforcement member 5 here forms a closed section in itself, so without panel main body 4. The top portion 5" of reinforcement member 5 may first be molded or glued to the bottom portion before reinforcement member 5 is encapsulated or glued to panel main body 4. The reinforcement member 5 has a mounting section 14 outwardly of panel main body 4 to be able to mount a (bulb) seal to reinforcement member 5. One or more drainage holes 15 may be made in reinforcement member 5 below the outer edge of panel main body 4 to drain off any water entered between mounting section 14 of reinforcement member 5 and the outer edge of panel main body 4.

The embodiment of Fig. 12 comprises a preformed fiber sheet 13 defining the shape of the semi-closed section of reinforcement member 5. The preformed fiber sheet 13 is attached to panel main body 4 by an outer encapsulation 16, whereas a foam 17 may be filled into the space between fiber sheet 13 and the lower side of panel main body 4.

Fig. 13 shows an embodiment in which fiber sheet 13 is arranged below sandwich material 18 which is attached to panel main body 4 by contact glue and the remainder of reinforcement member 5 is then encapsulated around the sandwich material 18 and fiber sheet 13 and to panel main body 4.

In the embodiment of Fig. 14, fiber sheet 13 is arranged on the bottom of a hollow in an injection molded reinforcement member 5. The reinforcement member 5 is made from a material having a coefficient of expansion which is close to that of panel main body 4. The reinforcement member 5 may be glued to panel main body 4 and a separate or integrated encapsulation 16 may be used at the edge of panel main body 4 to serve as a mounting member of or counter member for a (bulb) seal.

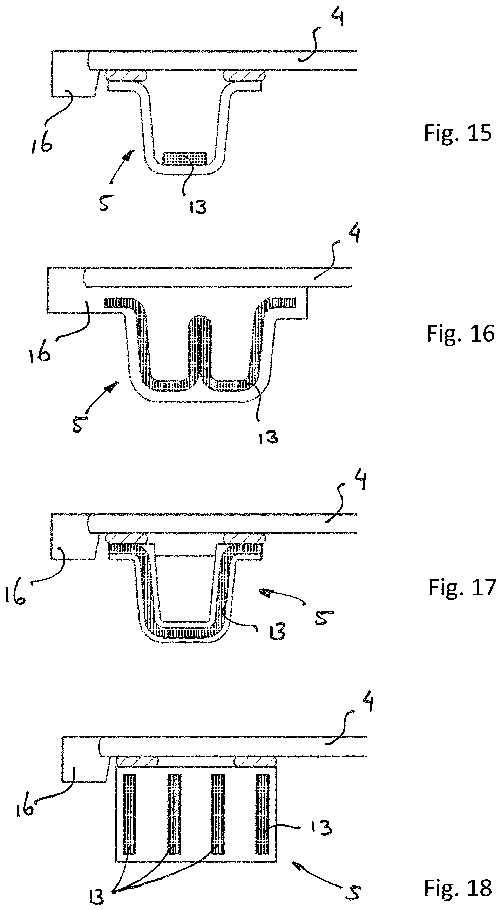

The Fig. 15 embodiment again shows an injection molded reinforcement member 5, but now fiber sheet 13 is made as an adhesive tape attached to the bottom of the hollow in reinforcement member 5 before it is glued to panel main body 4.

Fig. 16 shows an embodiment of reinforcement member 5 in which fiber sheet 13 is preformed again, now with a W-shaped cross section, which is completely surrounded by encapsulating material 16 forming the rest of reinforcement member 5 and simultaneously attaches reinforcement member 5 to panel main body 4.

In Fig. 17, reinforcement member 5 is mainly formed by fiber sheet 13 which is preformed into the main shape of reinforcement member 5 and which may be covered by a foil or may be back molded in plastic material like PA, PET or like plastics. The hollow within fiber sheet 13 form may be fully or partly filled with stiffeners molded in PA, PET or similar plastics. The reinforcement member 5 may be glued to panel main body 4 and an encapsulation 16 may be provided again at the edge of panel main body 4.

Fig. 18 shows an embodiment in which a plurality of fiber sheets 13 is arranged side-by-side and perpendicularly to the panel main body. The fiber sheets 13 are molded into a plastic carrier material or into encapsulation material 16.

Fig. 19 shows again a reinforcement member 5 comprising a skeleton of fiber bundles 7 which, in this case, are over-molded by injection molding and encapsulated to attach it to panel main body 4. The hollow in reinforcement member 5 may be completely filled with encapsulation material 16 or also partly filled with a plastic foam 17.

In the Fig. 20 embodiment the skeleton of fiber bundles 7 of reinforcement member 5 is again over-molded by injection molding and then glued to panel main body 4.

Fig. 21 shows in a perspective view a possible form of the fiber skeleton, in this case as used in the embodiment of Fig. 19. It can be seen that fiber bundles 7 are formed from continuous fibers and are bent into the desired shape and frozen by setting the plastic matrix material using heat and/or pressure.

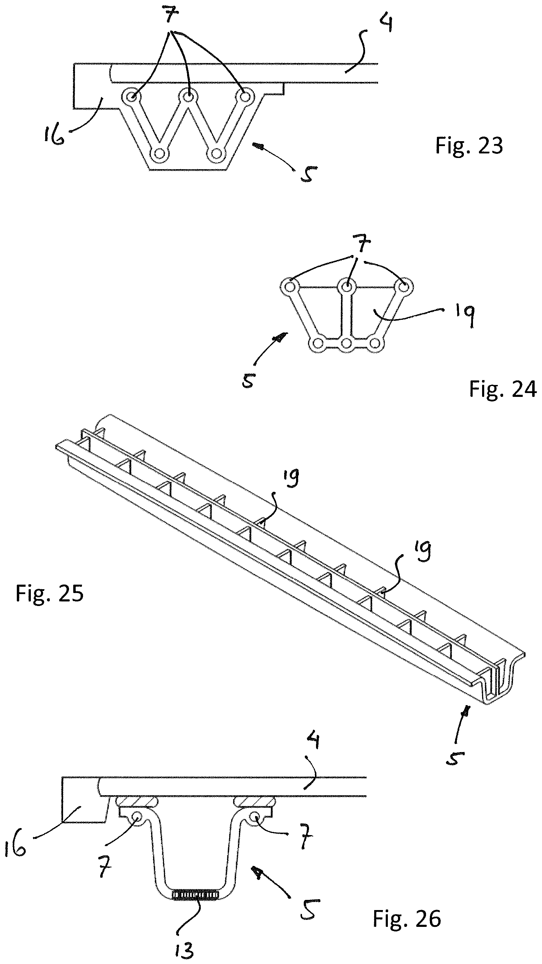

The fiber skeleton of Fig. 22 is over-molded by encapsulation material 16 by which it is also attached to panel main body 4. The hollow is filled with a foam 17. It is possible that only the parallel bundle portions remain in reinforcement member 5, while the end portions of the skeleton including the transverse connecting portions are cut away after the encapsulation step. Fig. 23 shows again an embodiment having an over-molded skeleton which is W-shaped. The skeleton is formed into a reinforcement member 5 and attached to panel main body 4 by encapsulation.

Fig. 24 and 25 show a variation of the embodiment of Fig. 23, wherein the W-shape is different and wherein additional transverse ribbing 19 is provided at regular intervals or with a specific spacing connecting the legs of the W-shape.

Fig. 26 shows again a combination of a fiber based sheet 13 and bundles 7 of a fiber skeleton which are over-molded by injection molding to form a reinforcement member 5 which is glued to the lower side of panel main body 4.

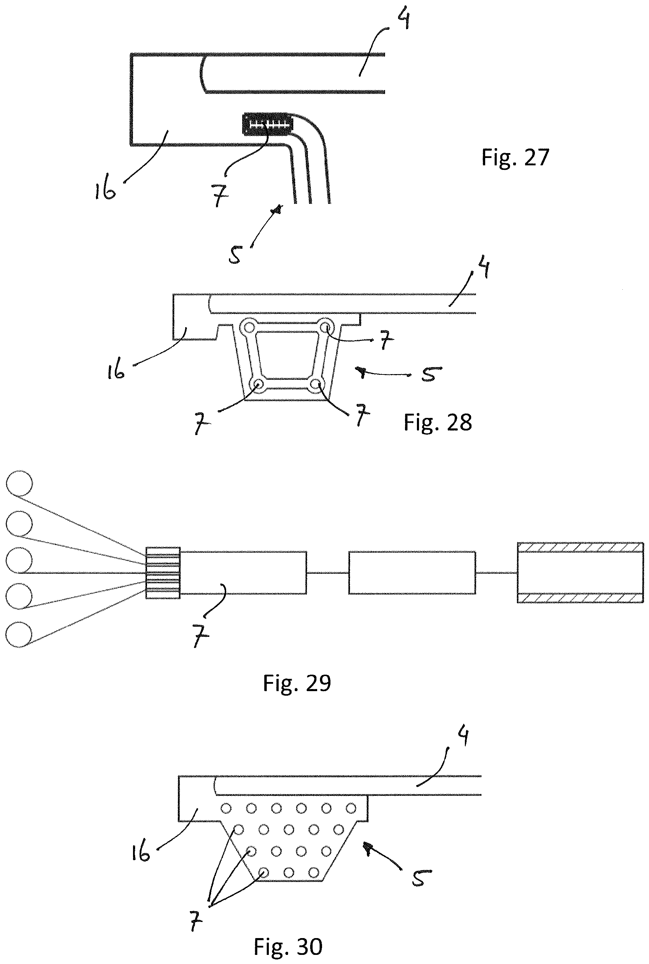

In the embodiment of Fig. 27 which shows a detail of a reinforcement member 5, fiber bundle 7 is pressed into a rectangular cross section.

Fig. 28 shows another embodiment of a reinforcement member 5 and Fig. 29 illustrates a method of making it. The fiber bundles 7 and matrix material are formed into a straight three dimensional shape by extrusion, extension molding or pultrusion, which is a well-known production method for fiber reinforced profiles. This pre-shape is then cut into the desired length and over-molded to a sandwich form. This is then glued or encapsulated to panel main body 4. If desired the straight reinforcement member 5 can be bent into a curved shape during a consequent manufacturing step, before it is attached to panel main body 4.

Fig. 30 shows a variation in which fiber bundles 7 are substantially regularly distributed over the cross sectional area of reinforcement member 5.

The various parts of reinforcement member 5 may be made in different materials. The fibers may for example include glass or carbon fibers. The encapsulation material may be PU (polyurethane), PVC (polyvinylchloride), TPE (thermoplastic polyethylene) or the like. Injection molded parts may comprise PA-6 (polyamide), PA-66, PP (polypropylene), PBT (polybutylene terephthalate)and PET (polyethylene terephthalate), and may include glass and carbon fibers as well. Matrix material may also consist of e.g. PA-6, PA-66, PP, PBT, PET or similar plastics.

From the above, it follows that the invention provides a panel having a light (up to 60% lighter than a steel reinforcement), yet rigid reinforcement member.

The invention is not limited to the embodiments described above and shown in the drawings, which can be varied in different manners within the scope of the attached claims. Although the panel has been described with reference to an open roof construction for a vehicle in which it can be used, the invention is not limited thereto. Reinforced panels could be used in all kinds of applications, although the main application is panels for vehicles, such as cars, trucks, caravans and the like, vessels and the like. However, stationary applications are also conceivable if loads on the panel require a separate reinforcement for the panel main body.

## Claims

1. A panel (3), preferably for use in a vehicle, in particular in an open roof construction for a vehicle, comprising:
a substantially rectangular panel main body (4), and
at least one elongated reinforcement member (5, 5') positioned at least partly in the vicinity of an edge of said panel main body and firmly connected thereto,
the reinforcement member being made of a plastic material and being reinforced by a fiber-based reinforcement, **characterized in that** the fiber-based reinforcement includes continuous fiber bundles (7) shaped into several loops, which are shaped into a three dimensional loop shaped skeleton, wherein the loops extend in different planes substantially parallel to the elongation of the reinforcement member (5, 5') and being connected by transverse loop sections (20).

2. The panel of claim 1, wherein the fiber bundles (7) have a circular cross-section, or are pressed into a rectangular cross-section with the help of plastic matrix material.

3. The panel of claim 1, wherein the fiber-based reinforcement includes fibers woven into multiple layers, preferably including fibers running in different directions, said layers being pressed into a sheet (13) with the help of plastic matrix material, said sheet being incorporated in the reinforcement member (5, 5') the fiber sheet (13) preferably being attached to the reinforcement member in the form of a tape glued to a molded, e.g. injection molded reinforcement member and/or the fiber sheet (13) is incorporated into the reinforcement member (5, 5') in a non-planar shape.

4. The panel of any of the preceding claims, wherein the reinforcement member (5, 5')is at least partly made of encapsulated material, for example polyurethane, polyvinylchloride or thermoplastic polyethylene.

5. The panel of any of the preceding claims, wherein the fiber bundles (7) and/or sheets (13) are over-molded with a plastic material through injection-molding.

6. The panel of any of the preceding claims, wherein the reinforcement member (5, 5') is at least partly made with a closed cross-section when attached to the panel main body (4).

7. The panel of any of the preceding claims, wherein the reinforcement member (5, 5') extends around the entire edge of the panel main body (4).

8. The panel of claim 6, wherein the reinforcement member (5, 5') is provided with an additional section (12) extending along a central part of the panel main body (4).

9. The panel of claim 6, wherein a width and/or thickness of the reinforcement member (5, 5') is locally increased.

10. The panel of any of claims 1 - 6, wherein the panel (3) is reinforced by front (5) and rear (5') reinforcement members positioned near a front and rear edge of the panel main body (4) and interconnected by metal brackets (6) positioned near side edges of the panel main body and molded to the front and rear reinforcement members and panel main body.

11. The panel of any of the preceding claims, wherein the reinforcement member (5, 5') has a hollow cross-section and wherein the hollow is filled with a foam (17) and/or a sandwich material (18).

12. The panel of any of the preceding claims, wherein the reinforcement member (5, 5') is attached to the panel main body (4) by glue or by encapsulation material (16) forming part of the reinforcement member.

13. The panel of claim 1, wherein the fibers are formed by extrusion or pultrusion into parallel fiber bundles (7) over-molded by plastic material into a sandwich reinforcement member.

14. A panel (3), preferably for use in a vehicle, in particular in an open roof construction for a vehicle, comprising:
a substantially rectangular panel main body (4), and at least one elongated reinforcement member (5, 5') positioned at least partly in the vicinity of an edge of said panel main body and firmly connected thereto, the reinforcement member being made of a plastic material and being reinforced by a fiber-based reinforcement, **characterized in that** the reinforcement includes fibers woven into multiple layers, said layers being pressed into a sheet (13) with the help of plastic matrix material, said fiber sheet being incorporated in the reinforcement member (5, 5') by attaching it to the reinforcement member as a tape glued to a molded reinforcement member.

## Patentansprüche

1. Paneel (3), bevorzugt zur Verwendung in einem Fahrzeug, insbesondere in einer Offendachkonstruktion für ein Fahrzeug, aufweisend:
einen im Wesentlichen rechteckigen Paneelhauptkörper (4) und wenigstens ein langgestrecktes Verstärkungselement (5, 5'), das wenigstens teilweise in der Nähe eines Rands des Paneelhauptkörpers positioniert ist und fest damit verbunden ist, wobei das Verstärkungselement aus einem Kunststoffmaterial gemacht ist und durch eine Faser-basierte Verstärkung verstärkt ist, **dadurch gekennzeichnet, dass** die Faser-basierte Verstärkung kontinuierliche Faserbündel (7) aufweist, die zu einigen Schlingen geformt sind, die zu einem dreidimensionalen Schlingen-förmigen Skelett geformt sind, wobei die Schlingen sich in unterschiedlichen Ebenen im Wesentlichen parallel zu der Erstreckung des Verstärkungselements (5, 5') erstrecken und durch Querschlingenabschnitte (20) verbunden sind.

2. Paneel gemäß Anspruch 1, wobei die Faserbündel (7) einen kreisförmigen Querschnitt haben oder zu einem rechteckigen Querschnitt verpresst sind mit Hilfe von Kunststoffmatrixmaterial.

3. Paneel gemäß Anspruch 1, wobei die Faser-basierte Verstärkung Fasern aufweist, die zu Mehrfachschichten gewoben sind, bevorzugt aufweisend Fasern, die in unterschiedlichen Richtungen verlaufen, wobei die Schichten mit Hilfe von Kunststoffmatrixmaterial zu einem Laminat (13) verpresst sind, wobei das Laminat in das Verstärkungselement (5, 5') eingebracht ist, wobei das Faserlaminat (13) bevorzugt an dem Verstärkungselement angebracht ist in der Form eines Bands, das an ein gegossenes, z.B. spritzgegossenes Verstärkungselement geklebt ist, und/oder das Faserlaminat (13) in das Verstärkungselement (5, 5') in einer nicht-ebenen Gestalt eingebracht ist.

4. Paneel gemäß irgendeinem der vorigen Ansprüche, wobei das Verstärkungselement (5, 5') wenigstens teilweise aus eingekapseltem Material gemacht ist, z.B. Polyurethan, Polyvinylchloride oder thermoplastisches Polyethylen.

5. Paneel gemäß irgendeinem der vorigen Ansprüche, wobei die Faserbündel (7) und/oder Laminate (13) überformt sind mit einem Kunststoffmaterial mittels Spritzgießens.

6. Paneel gemäß irgendeinem der vorigen Ansprüche, wobei das Verstärkungselement (5, 5') wenigstes teilweise erstellt ist mit einem geschlossenen Querschnitt, wenn es an dem Paneelhauptkörper (4) angebracht ist.

7. Paneel gemäß irgendeinem der vorigen Ansprüche, wobei das Verstärkungselement (5, 5') sich um den gesamten Rand des Paneelhauptkörpers (4) herum erstreckt.

8. Paneel gemäß Anspruch 6, wobei das Verstärkungselement (5, 5') mit einem zusätzlichen Abschnitt (12) bereitgestellt ist, der sich entlang eines zentralen Abschnitts des Paneelhauptkörpers (4) erstreckt.

9. Paneel gemäß Anspruch 6, wobei eine Weite und/oder Dicke des Verstärkungselements (5, 5') lokal vergrößert ist.

10. Paneel gemäß irgendeinem der Ansprüche 1-6, wobei das Paneel (3) verstärkt ist durch ein vorderes (5) und ein hinteres (5') Verstärkungselement, die nahe eines vorderen und eines hinteren Rands des Paneelhauptkörpers (4) positioniert sind und durch Metallhalter (6) miteinander verbunden sind, die nahe seitlicher Ränder des Paneelhauptkörpers positioniert sind und an das vordere und das hintere Verstärkungselement und den Paneelhauptkörper angeformt sind.

11. Paneel gemäß irgendeinem der vorigen Ansprüche, wobei das Verstärkungselement (5, 5') einen hohlen Querschnitt hat und wobei der Hohlraum mit einem Schaum (17) und/oder einem Sandwich-Material (18) gefüllt ist.

12. Paneel gemäß irgendeinem der vorigen Ansprüche, wobei das Verstärkungselement (5, 5') an dem Paneelhauptkörper (4) angebracht ist durch Kleber oder durch Einkapselungsmaterial (16), das Teil des Verstärkungselements bildet.

13. Vorsprung gemäß Anspruch 1, wobei die Fasern gebildet sind durch Extrusion oder Pultrusion zu parallelen Faserbündeln (7), die von einem Kunststoffmaterial überformt sind, zu einem Sandwich-Verstärkungselement.

14. Paneel (3), bevorzugt zur Verwendung in einem Fahrzeug, insbesondere in einer Offendachkonstruktion für ein Fahrzeug, aufweisend:
einen im Wesentlichen rechteckigen Paneelhauptkörper (4) und wenigstens ein langgestrecktes Verstärkungselement (5, 5'), das wenigstens teilweise in der Nähe eines Rands des Paneelhauptkörpers positioniert ist und fest damit verbunden ist, wobei das Verstärkungselement aus einem Kunststoffmaterial gemacht ist und durch eine Faser-basierte Verstärkung verstärkt ist, **dadurch gekennzeichnet, dass** die Verstärkung Fasern aufweist, die zu Mehrfach-Schichten gewoben sind, wobei die Schichten zu einem Laminat (13) verpresst sind mit Hilfe von Kunststoffmatrixmaterial, wobei das Faserlaminat in das Verstärkungselement (5, 5') eingebracht ist indem es an dem Verstärkungselement angebracht ist als ein Band, das an ein gegossenes Verstärkungselement geklebt ist.

## Revendications

1. Panneau (3), de préférence pour utilisation dans un véhicule, en particulier dans une construction de toit ouvrant pour un véhicule, comprenant :
un corps principal de panneau sensiblement rectangulaire (4), et au moins un élément de renfort allongé (5, 5') positionné au moins partiellement à proximité d'un bord dudit corps principal de panneau et solidement relié à celui-ci, l'élément de renfort étant composé d'un matériau plastique et étant renforcé d'un renfort à base de fibres, **caractérisé en ce que** le renfort à base de fibres inclut des paquets de fibres continues (7) façonnés en plusieurs boucles, qui sont façonnées en un squelette en forme de boucle tridimensionnelle, dans lequel les boucles s'étendent dans différents plans sensiblement parallèles à l'allongement de l'élément de renfort (5, 5') et étant reliées par des sections de boucle transversales (20).

2. Panneau selon la revendication 1, dans lequel les paquets de fibres (7) présentent une coupe transversale circulaire, ou sont pressés dans une coupe transversale rectangulaire à l'aide de matériau matriciel plastique.

3. Panneau selon la revendication 1, dans lequel le renfort à base de fibres inclut des fibres tissées dans de multiples couches, incluant de préférence des fibres s'étalant dans différentes directions, lesdites couches étant pressées dans une feuille (13) à l'aide d'un matériau matriciel plastique, ladite feuille étant incorporée dans l'élément de renfort (5, 5'), la feuille fibreuse (13) étant de préférence attachée à l'élément de renfort sous la forme d'une bande collée à un élément de renfort moulé, par exemple moulé par injection et/ou la feuille fibreuse (13) est incorporée dans l'élément de renfort (5, 5') selon une forme non planaire.

4. Panneau selon l'une quelconque des revendications précédentes, dans lequel l'élément de renfort (5, 5') est au moins partiellement composé d'un matériau encapsulé, par exemple du polyuréthane, du polychlorure de vinyle ou du polyéthylène thermoplastique.

5. Panneau selon l'une quelconque des revendications précédentes, dans lequel les paquets de fibres (7) et/ou feuilles (13) sont surmoulés d'un matériau plastique par moulage par injection.

6. Panneau selon l'une quelconque des revendications précédentes, dans lequel l'élément de renfort (5, 5') est au moins partiellement créé avec une section transversale fermée lorsqu'il est attaché au corps principal de panneau (4).

7. Panneau selon l'une quelconque des revendications précédentes, dans lequel l'élément de renfort (5, 5') s'étend autour du bord entier du corps principal de panneau (4).

8. Panneau selon la revendication 6, dans lequel l'élément de renfort (5, 5') est pourvu d'une section supplémentaire (12) s'étendant le long d'une partie centrale du corps principal de panneau (4).

9. Panneau selon la revendication 6, dans lequel une largeur et/ou une épaisseur de l'élément de renfort (5, 5') sont localement augmentées.

10. Panneau selon l'une quelconque des revendications 1 à 6, dans lequel le panneau (3) est renforcé par des éléments de renfort avant (5) et arrière (5') positionnés près d'un bord avant et arrière du corps principal de panneau (4) et reliés l'un à l'autre par des supports métalliques (6) positionnés près de bords latéraux du corps principal de panneau et moulés sur les éléments de renfort avant et arrière et le corps principal de panneau.

11. Panneau selon l'une quelconque des revendications précédentes, dans lequel l'élément de renfort (5, 5') présente une coupe transversale creuse et dans lequel le creux est rempli d'une mousse (17) et/ou un matériau sandwich (18).

12. Panneau selon l'une quelconque des revendications précédentes, dans lequel l'élément de renfort (5, 5') est attaché au corps principal de panneau (4) par de la colle ou par un matériau d'encapsulation (16) formant une partie de l'élément de renfort.

13. Panneau selon la revendication 1, dans lequel les fibres sont formées par extrusion ou pultrusion en paquets de fibres parallèles (7) surmoulés par un matériau plastique dans un élément de renfort sandwich.

14. Panneau (3), de préférence pour utilisation dans un véhicule, en particulier dans une construction de toit ouvrant pour un véhicule, comprenant :
un corps principal de panneau sensiblement rectangulaire (4), et au moins un élément de renfort allongé (5, 5') positionné au moins partiellement à proximité d'un bord dudit corps principal de panneau et solidement relié à celui-ci, l'élément de renfort étant composé d'un matériau plastique et étant renforcé d'un renfort à base de fibres, **caractérisé en ce que** le renfort inclut des fibres tissées dans de multiples couches, lesdites couches étant pressées dans une feuille (13) à l'aide d'un matériau matriciel plastique, ladite feuille fibreuse étant incorporée dans l'élément de renfort (5, 5') en l'attachant à l'élément de renfort comme une bande collée à un élément de renfort moulé.
